# EUROPEAN PATENT APPLICATION

(11) **EP 3 640 144 A1**
(43) Date of publication of application: **22.04.2020**
(21) Application number: 18816542.7
(22) Date of filing: 13.06.2018
(51) Int. Cl.: B64F 1/305

(54) **HEIGHT MEASUREMENT DEVICE AND BOARDING BRIDGE HAVING SAME**

(30) Priority: 14.06.2017 CN 201710447821
(71) Applicant: China International Marine Containers (Group) Ltd., Shekou Industrial Zone Shenzhen Guangdong 518067 (CN); Shenzhen CIMC-TIANDA Airport Support Ltd., Shenzhen, Guangdong 518103 (CN)
(72) Inventor: HUANG, Jianming, Shenzhen Guangdong 518103 (CN); HE, Hao, Shenzhen Guangdong 518103 (CN); XIANG, Wei, Shenzhen Guangdong 518103 (CN); ZHANG, Jie, Shenzhen Guangdong 518103 (CN); NIE, Jifang, Shenzhen Guangdong 518103 (CN)
(74) Representative: Kordel, Mattias
(86) International application number: PCT/CN2018/091016
(87) International publication number: WO 2018/228419

(57) **Abstract**

Disclosed are a height measurement device and a boarding bridge having same. The height measurement device has a height measurement sleeve and a distance measurement mechanism; the height measurement sleeve is vertically provided in an apparatus to be measured and comprises at least two matching sleeves; the distance measurement mechanism is provided at the bottom or top of the height measurement sleeve, wherein when a lifting mechanism of the apparatus to be measured drives the main body to lift, the height measurement sleeve stretches and lifts along with the main body or the lifting mechanism to obtain height information of the main body or the lifting mechanism according to height information of the height measurement sleeve measured by the distance measurement mechanism. According to the present invention, the distance measurement mechanism is mounted in the height measurement sleeve so as to prevent the height measurement device from being interfered by obstacles in the monitoring process, and it is not easy to produce mis-measurement phenomenon in a special environment such as rainy and snowy, so as to improve the accuracy and stability of the height measurement device.

## Description

### CROSS-REFERENCE TO RELATED APPLICATIONS

The present disclosure is based on and claims priority to Chinese application No. 201710447821.3, filed on June 14, 2017, the entire contents of which are incorporated herein by reference.

### TECHNICAL FIELD

The present disclosure relates to an airport equipment technical field specifically relates to a height measuring device and have device's boarding bridge.

### BACKGROUND

In the working process of the boarding bridge, the height measuring device is required to monitor lifting height information of the boarding bridge. The existing boarding bridge usually adopts an ultrasonic height measurement, i.e., an ultrasonic sensor is installed on the boarding bridge to perform a ultrasonic distance measurement, and detection information is fed back to a control system in real time. However, the ultrasonic distance measurement is easily interfered by obstacles, and other problems such as error measurement may easily occur when the ultrasonic distance measurement is used in rainy and snowy days, so that the high accuracy of measurement is influenced.

Chinese application No. CN201210389260.3 discloses a boarding bridge lifting synchronous detection system, which adopts two cable encoders to be respectively installed on the lifting columns at both sides of a boarding bridge passage. The synchronism of lifting at both sides of the boarding bridge passage may be detected with a lifting column height difference value detected by cable encoders on the lifting columns at both sides of the boarding bridge passage, and then the lifting columns at both sides of the passage are adjusted by control signals of a control system to achieve balance between both sides.

However, the above-mentioned technical solutions have the following problems: a body of the cable encoder is directly installed at the top of an outer guide pipe of the lifting column, and an end of the cable is fixed at the top of an inner guide pipe of the column, so that the installation is complex, and the original lifting column needs to be correspondingly structurally adjusted to adapt to the installation of the cable encoder; moreover, since the cable encoder is installed on the top of the lifting column, the maintenance of the cable encoder is comparatively difficult, and a maintenance personal needs to scramble onto the lifting column and perform maintenance.

The above information disclosed in this background section is only intended to enhance understanding of the background of the present disclosure, and thus it may include information that does not constitute the prior art known to those of ordinary skill in the art.

### SUMMARY

The technical problem to be solved by the present disclosure is how to provide a height measuring device which is free from interference of obstacles and is less prone to mis-measurement, and how to provide a boarding bridge which is simple in installation and convenient in maintenance.

Additional aspects and advantages of the present disclosure will be set forth in part in the following description and will be in part obvious from the description, or may be learned by practice of the present disclosure.

In order to achieve the above purposes, the following technical solutions are adopted in the present disclosure.

According to an aspect of the present disclosure, a height measuring device is provided. The height measuring device is installed on an equipment to be measured to measure a height of the equipment to be measured. The equipment to be measured includes a main body and a lifting mechanism. The lifting mechanism is connected to the main body to lift the main body. The height measuring device includes a height measuring sleeve and a distance measuring mechanism. The height measuring sleeve is vertically disposed on the equipment to be measured and includes at least two sleeves which are sleeved and matched with each other. The distance measuring mechanism is provided at bottom or top of the height measuring sleeve. When the lifting mechanism drives the main body rise or fall, the height measuring sleeve extends or retracts as the main body or the lifting mechanism, so that a height information of the main body or the lifting mechanism is obtained according to a height information of the height measuring sleeve measured by the distance measuring mechanism.

According to one embodiment of the present disclosure, the height measuring sleeve includes a first sleeve and a second sleeve. The first sleeve is relatively fixed. The second sleeve is sleeved inside or outside the first sleeve in a lifting manner.

According to one embodiment of the present disclosure, the height measuring sleeve further includes a plurality of sets of sliding sleeves. When the second sleeve is sleeved inside the first sleeve, the plurality of sets of sliding sleeves are respectively provided on an inner wall of a top of the first sleeve and an outer wall of the bottom of the second sleeve; when the second sleeve is sleeved outside the first sleeve, plurality of sets of sliding sleeves are respectively provided on an outer wall of the top of the first sleeve and an inner wall of the bottom of the second sleeve.

According to one embodiment of the present disclosure, the distance measuring mechanism includes a cable encoder. The cable encoder includes a body and a cable. The body is provided at the bottom of the height measuring sleeve. The cable has an end retractably wound inside the body, and the other end penetrating through an inner cavity of the height measuring sleeve and connected to the top of the height measuring sleeve.

According to one embodiment of the present disclosure, the height measuring device further includes a carriage. The carriage is connected to the bottom or top of the height measuring sleeve. The body is provided in the carriage. The other end of the cable extends out of the carriage and penetrates through the inner cavity of the height measuring sleeve.

According to one embodiment of the present disclosure, the distance measuring mechanism is configured as a cable encoder. The cable encoder includes a body and a cable. The body is provided at the top of the height measuring sleeve. One end of the cable is wound inside the body in a retractable manner, and the other end of the cable penetrates through the inner cavity of the height measuring sleeve and is connected to the bottom of the height measuring sleeve.

According to one embodiment of the present disclosure, the height measuring device further includes a carriage. The carriage is connected to the bottom or top of the height measuring sleeve. The body is provided in the carriage. The other end of the cable extends out of the carriage and penetrates through the inner cavity of the height measuring sleeve.

According to another aspect of the present disclosure, a boarding bridge is provided. The boarding bridge includes a passage, a walking mechanism, a lifting column and a height measuring device. The lifting column is connected between the passage and the walking mechanism, and is used for lifting the passage. The height measuring sleeve is vertically disposed on the lifting column and includes at least two sleeves which are sleeved and matched with each other. The distance measuring mechanism is provided at bottom or top of the height measuring sleeve. When the lifting column drives the passage rise or fall, the height measuring sleeve extends or retracts as the main body or the lifting mechanism, so that a height information of the main body or the lifting mechanism is obtained according to a height information of the height measuring sleeve measured by the distance measuring mechanism.

According to one embodiment of the present disclosure, two lifting columns are respectively provided at two sides of the passage. The boarding bridge includes at least one height measuring device. At least one height measuring device is provided on at least one of two lifting columns.

According to one embodiment of the present disclosure, the boarding bridge includes two height measuring devices. The two height measuring devices are respectively provided on the two lifting columns.

According to one embodiment of the present disclosure, each of the lifting columns includes an inner guide pipe and an outer guide pipe. The bottom of the inner guide pipe is fixed on the walking mechanism of the boarding bridge. The outer guide pipe is sleeved outside the inner guide pipe in a lifting manner and is connected to a side wall of the passage. The lifting column drives the passage rise or fall by means that the outer guide pipe extends or retracts relative to the inner guide pipe.

According to one embodiment of the present disclosure, the height measuring sleeve includes a first sleeve and a second sleeve. The bottom of the first sleeve is fixed with respect to the bottom of the inner guide pipe. The second sleeve is sleeved outside or inside the first sleeve in a lifting manner, and the top of the second sleeve is fixed with respect to the top of the outer guide pipe.

According to one embodiment of the present disclosure, the height measuring device further includes a lower mount and an upper mount. The lower mount is relatively fixed at a lower end portion of the inner guide pipe, and the bottom of the height measuring sleeve is fixed on the lower mount. The upper mount is relatively fixed at an upper end portion of the outer guide pipe, and the top of the height measuring sleeve is fixed on the upper mount.

According to one embodiment of the present disclosure, the cable encoder further includes a carriage. The carriage is fixed on the lower mount and connected to the bottom of the height measuring sleeve. The body is provided in the carriage. The other end of the cable extends out of the carriage and penetrates through the inner cavity of the height measuring sleeve.

According to one embodiment of the present disclosure, the cable encoder further includes a carriage. The carriage is fixed on the upper mount and connected to the top of the height measuring sleeve. The body is provided in the carriage. The other end of the cable extends out of the carriage and penetrates through the inner cavity of the height measuring sleeve.

According to the technical solutions described above, the beneficial effects of the present disclosure are as follows.

In the height measuring device proposed by the present disclosure, the distance measuring mechanism is installed in the height measurement sleeve, so that the height measuring device is prevented from interference of obstacles during the monitoring process, and it is less prone to mis-measurement under a special environment such as rainy or snowy days, thereby improving accuracy and stability of the height measuring device.

In the boarding bridge proposed by the present disclosure, the height measuring device of the present disclosure is used, and the height measuring device is independent from other structures such as a lifting column by utilizing a cooperation design of the height measuring sleeve and the distance measuring mechanism. Compared with the prior art, the installation complexity of the distance measuring mechanism of the cable encoder is effectively reduced. Meanwhile, the stability and accuracy of the height measuring device are improved based on the protection effect of the height measuring sleeve, and effects of height detection and lifting control of the boarding bridge are further optimized.

Further, in one embodiment of the present disclosure, when the carriage of the cable encoder, on which the body is installed, is located at the bottom of the lifting column, inspection and maintenance of the height measuring device by a maintenance person can be further facilitated.

The above and other objects, features and advantages of the present disclosure will become more apparent from the following description of the preferred embodiments with reference to the accompanying drawings.

### BRIEF DESCRIPTION OF THE DRAWINGS

FIG. 1 is a front view illustrating a height measuring device installed to a boarding bridge according to an exemplary embodiment;
FIG. 2 is an enlarged view of portion A of FIG. 1;
FIG. 3 is an enlarged view of portion B of FIG. 1; and
FIG. 4 is a side view of the height measuring device shown in FIG. 1 installed to a boarding bridge.

In the drawings:
110 height measuring sleeve; 111 first sleeve; 112 second sleeve; 113 sliding sleeve; 114 connecting rod; 115 guiding block; 120 cable encoder; 121 body; 122 cable; 130 carriage; 131 maintenance door; 140 lower mount; 150 upper mount; 210 passage; 220 lifting column; 221 inner guide pipe; 222 outer guide pipe; 230 beam.

### DETAILED DESCRIPTION

Example embodiments will now be described more fully with reference to the accompanying drawings. However, the example embodiments can be embodied in a variety of forms, and should not be construed as being limited to the embodiments set forth herein; rather, these embodiments are provided so that this disclosure will be thorough and complete, and the concepts of the example embodiments will be fully given to those skilled in the art. The same reference numerals in the drawings denote the same or similar structures, and thus their detailed descriptions will be omitted.

### EMBODIMENT OF HEIGHT MEASURING DEVICE

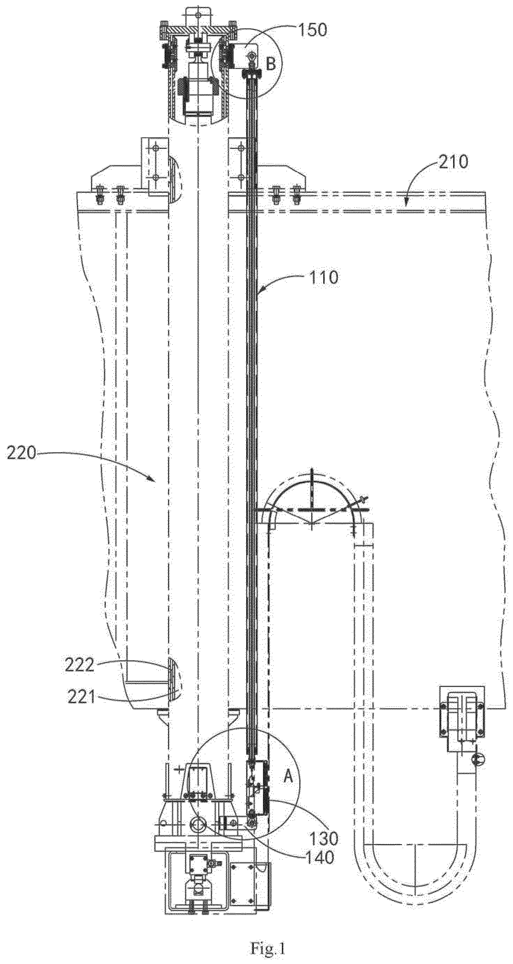

Referring to FIG. 1, a front view of a boarding bridge having a height measuring device capable of embodying the principles of the present disclosure installed thereto is representatively illustrated in FIG. 1. In the exemplary embodiment, the height measuring device proposed by the present disclosure is exemplified as a height monitoring device for measuring a boarding bridge, and further, the cable encoder 120 is exemplified as a distance measuring mechanism. Those skilled in the art will readily appreciate that various modifications, additions, substitutions, deletions, or other changes may be made to the detailed description described below to configure the height measuring device of the present disclosure as a height or distance monitoring device for other equipment, and such changes are within the scope of the principles of the height measuring device of the present disclosure.

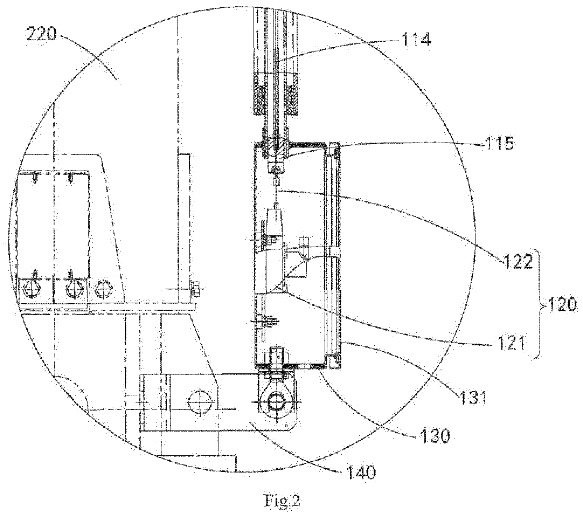

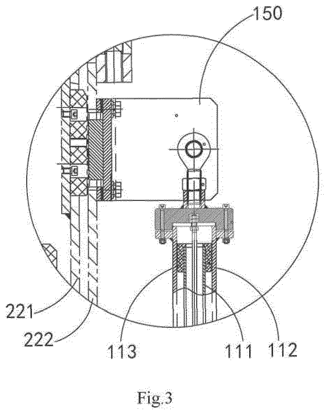

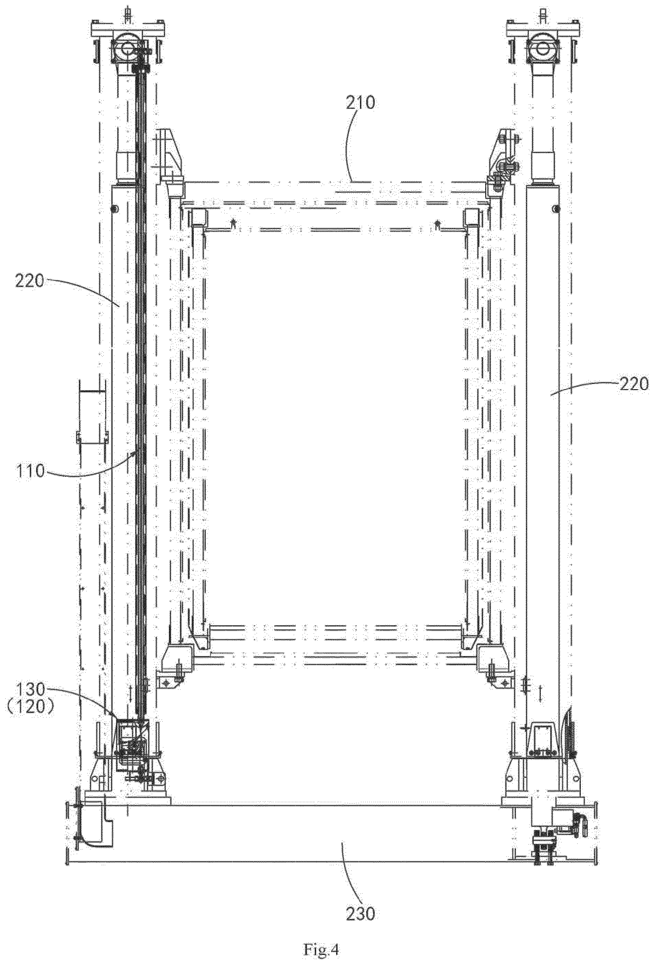

As shown in FIG. 1, in the present embodiment, the height measuring device proposed by the present disclosure is used to be installed on an equipment to be measured, such as a boarding bridge, for height monitoring during the lifting process thereof. The height measuring device proposed by the present disclosure mainly includes a height measuring sleeve 110, a distance measuring mechanism, a carriage 130, a lower mount 140 and an upper mount 150. Referring to FIGS. 2 to 4, FIG. 2 representatively illustrates an enlarged view of portion A of FIG. 1; FIG. 3 representatively illustrates an enlarged view of portion B of FIG. 1; and FIG. 4 representatively illustrates a side view of the height measuring device proposed by the present disclosure installed to a boarding bridge. The structures, connection relationships and functions of various main components of the height measuring device proposed by the present disclosure will be described in detail below with reference to the drawings mentioned above.

As shown in FIGS. 1 and 4, in the present embodiment, the equipment to be measured mainly includes a main body and a lifting mechanism (i.e., a passage 210 and a lifting column 220 of a boarding bridge). The lifting mechanism is connected to the main body to provide a lifting function for the main body. Specifically, the lifting mechanism may be provided at a side, bottom or top of the main body.

As shown in FIG. 2 and FIG. 3, in the present embodiment, the height measuring sleeve 110 is vertically disposed and includes two sleeves, i.e., a first sleeve 111 and a second sleeve 112, which are sleeved and matched with each other. Specifically, the first sleeve 111 is relatively fixed, i.e., is not lifted with lifting of the lifting mechanism (or the main body). The second sleeve 112 is sleeved on a periphery of the first sleeve 111 in a lifting manner, that is, the first sleeve 111 extends into the second sleeve 112 and is configured to rise or fall correspondingly with lifting of the lifting mechanism (or the main body). When the height measuring sleeve 110 is in an initial state, i.e. the lifting mechanism is not working and the main body is in an initial position, the top end of the first sleeve 111 does not protrude from the top end of the second sleeve 112. In view of the above, in the present embodiment, the second sleeve 112 is designed to be able to move upwards relative to the first sleeve 111, and those skilled in the art will readily understand that positions of two sleeves can be adjusted or the moving direction can be changed according to the design concept of the present disclosure without departing from the scope of the principles of the present disclosure.

It should be noted that, in the present embodiment, the above-mentioned structural composition and connection mode of the height measuring sleeve 110 are merely exemplary, and it is intended to adapt to an equipment to be measured, such as a boarding bridge, with a simpler structure. In other embodiments, the structure and connection mode of the height measuring sleeve 110 can be flexibly adjusted according to requirements. For example, the number of height-measuring sleeves 110 may be three or more, for example, in a structure similar to a multi-stage hydraulic cylinder, and it is required to ensure that one of various sleeves at one end does not correspondingly lift with lifting of the lifting mechanism, and the other sleeves correspondingly lift in a multi-stage telescopic manner with lifting of the lifting mechanism. For another example, the first sleeve 111 may also be sleeved on a periphery of the second sleeve 112, i.e., the second sleeve 112 may also extend into the first sleeve 111. For another example, the second sleeve 112 may be fixed relatively, and the first sleeve 111 may be telescopically sleeved on the second sleeve 112 in a lifting manner, which will not be limited thereto.

Further, as shown in FIG. 2 and FIG. 3, in the present embodiment, the height measuring sleeve 110 further includes two sets of sliding sleeves 113. Specifically, an outer diameter of the first sleeve 111 is slightly smaller than an inner diameter of the second sleeve 112 for arrangement of the sliding sleeve 113 having a certain thickness. One set of sliding sleeves 113 is disposed on an outer wall of the top of the first sleeve 111, and the other set of sliding sleeves 113 is disposed on an inner wall of the bottom of the second sleeve 112. By the arrangement of the sliding sleeve 113, the second sleeve 112 may be more smoothly extended and lifted relative to the first sleeve 111. In other embodiments, sliding sleeves 113 may also be provided in multiple sets, for example, the sliding sleeves 113 are provided in multiple sets at two positions where the sliding sleeve 113 is provided in the axial direction, which will not be limited thereto. Furthermore, when the second sleeve 112 is sleeved inside the first sleeve 111, the inner wall of the top of the first sleeve 111 is provided with a sliding sleeve 113, and the outer wall of the bottom of the second sleeve 112 is provided with a sliding sleeve 113.

As shown in FIGS. 1, 2 and 4, in the present embodiment, the carriage 130 is fixed to the bottom of the height measuring sleeve 110, i.e., the bottom of the first sleeve 111, for accommodating the distance measuring mechanism. A through hole is provided at the position of the carriage 130 connected to the first sleeve 111 for the distance measuring mechanism to measure a height information of the height measuring sleeve 110. Specifically, in the present embodiment, the bottom end of the first sleeve 111 extends into the through hole of the carriage 130, and an opening at the bottom end of the first sleeve 111 corresponds to the position of the distance measuring mechanism. In other embodiments, the structure of the carriage 130 is not unique, and the carriage 130 may not be used. That is, the distance measuring mechanism is independently disposed at the bottom of the height measuring sleeve 110, and the specific technical solution may be flexibly adjusted according to actual requirements, which is not limited thereto.

Further, in the present embodiment, a sealing structure may be disposed at a connection between the carriage 130 and the first sleeve 111 to enhance protection of the distance measuring mechanism inside the carriage 130. Furthermore, the carriage 130 may be designed to have a structure of a maintenance door 131, so as to facilitate maintenance of the distance measuring mechanism therein by a maintenance person.

As shown in FIG. 2 and FIG. 3, in the present embodiment, the distance measuring mechanism is preferably configured as a cable encoder 120 including a body 121 and a cable 122. Specifically, the body 121 is disposed in the carriage 130, i.e., at the bottom of the height measuring sleeve 110. One end of the cable 122 is retractably wound inside the body 121, and the other end thereof passes through an inner cavity of the height measuring sleeve 110 and is connected to the top of the height measuring sleeve 110, e.g., the top of the inner cavity of the second sleeve 112. In other embodiments, when the carriage 130 is disposed on the top of the second sleeve 112, i.e. the body 121 is disposed on the top of the height measuring sleeve 110, one end of the cable 122 is retractably wound inside the body 121, and the other end thereof passes through the inner cavity of the height measuring sleeve 110 and is connected to the bottom of the height measuring sleeve 110.

Further, as shown in FIG. 2, in consideration of the overall height of the structure and the length of the cable 122 of the conventional cable encoder 120, in the present embodiment, the cable 122 is indirectly connected to the top of the height measuring sleeve 110 through a connecting rod 114. Specifically, the top end of the connecting rod 114 is connected to the top of the height measuring sleeve 110, for example, the top of the inner cavity of the second sleeve 112, and the connecting rod 114 is configured to penetrate inside the first sleeve 111. The bottom end of the connecting rod 114 is located substantially at the bottom opening of the first sleeve 111 and is connected to the cable 122 of the cable encoder 120, so that the cable 122 is indirectly connected to the height measuring sleeve 110 to be pulled out or taken back as it extends or retracts. Preferably, in this embodiment, the bottom end of the connecting rod 114 is connected to a guiding block 115. The guiding block 115 is in sliding fit with the first sleeve 111, and preferably matches with the inner cavity of the first sleeve 111, so that in the process that the connecting rod 114 drives the cable 122 to extend and retract, the guiding block 115 is used to guide the sliding of the connecting rod 114 in the first sleeve 111, thereby avoiding the occurrence of shaking, and further improving the stability of the height measuring device.

Based on the above structure, when the lifting mechanism drives the main body rise or fall, the second sleeve 112 extends and retracts along with the main body or the lifting mechanism relative to the first sleeve 111, i.e., the height of the height measuring sleeve 110 changes, so as to drive the cable 122 to change in length pulled out from the main body 121. The distance measuring mechanism obtains the height information of the main body or the lifting mechanism according to the measured height information of the height measuring sleeve 110.

It should be noted herein that the height measuring device illustrated in the drawings and described in the present specification is merely one example of a wide variety of height measuring devices that can employ the principles of the present disclosure. It should be clearly understood that the principles of the present disclosure are in no way limited to any of details of the height measuring device or any of components of the height measuring device shown in the drawings or described in this specification.

### EMBODIMENT OF BOARDING BRIDGE

In this embodiment, the boarding bridge proposed by the present disclosure mainly includes a passage 210, a walking mechanism, a lifting column 220, and the height measuring device proposed by the present disclosure. The structures, connection relationships, and functions of various main components of the boarding bridge proposed by the present disclosure will be described in detail below with reference to FIGS. 1 to 4.

As shown in FIGS. 1 and 4, in the present embodiment, the lifting column 220 is connected to the passage 210 to lift the passage. Specifically, two lifting columns or two sets of lifting columns 220 are provided and disposed at two sides of the passage 210. Each lifting column 220 includes an inner guide pipe 221 and an outer guide pipe 222, wherein the bottom of the inner guide pipe 221 is fixed on the walking mechanism of the boarding bridge, and the outer guide pipe 222 is sleeved outside the inner guide pipe 221 in a lifting manner and is connected to the side wall of the passage 210. The lifting column 220 may drive the passage 210 rise or fall by lifting of the outer guide pipe 222 relative to the inner guide pipe 221.

As shown in FIG. 4, in the present embodiment, the boarding bridge includes one height measuring device corresponding to one of two lifting columns 220, and provision of only one height measuring device can further simplify the structure and reduce the cost. Of course, there may be two height measuring devices respectively corresponding to two lifting columns 220, and one height measuring device is provided on each of two lifting columns 220 such that lifting heights of these two lifting columns 220 can be respectively measured, i.e., the lifting heights of two sides of the passage 210 can be respectively measured, thereby further realizing the synchronous measurement control of the lifting heights of two sides of the passage when the passage 210 is lifted by the lifting columns 220. The above-mentioned structure including the first sleeve 111 and the second sleeve 112 can be used as the height measuring sleeve 110 of the height measuring device, and the bottom of the first sleeve 111 is fixed relative to the bottom of the inner guide pipe 221, and the top of the second sleeve 112 is fixed relative to the top of the outer guide pipe 222. Specifically, in the present embodiment, the height measuring sleeve 110 further includes a lower mount 140 and an upper mount 150. The lower mount 140 is relatively fixed to the lower end portion of the inner guide pipe 221, the bottom of the first sleeve 111 (i.e., the bottom of height measuring sleeve 110) is fixed to the lower mount 140, the upper mount 150 is relatively fixed to the upper end portion of the outer guide pipe 222, and the top of the second sleeve 112 (i.e., the top of the height measuring sleeve 110) is fixed to the upper mount 150.

Further, the height measuring device of the present embodiment includes a carriage 130, and the carriage 130 is disposed at the bottom of the height measuring sleeve 110 and accommodates a cable encoder 120. Therefore, based on the above structure, the carriage 130 is fixed on the lower mount 140, and the bottom of the first sleeve 111 is fixed at the top of the carriage 130. The carriage 130 of the cable encoder 120, on which a body 121 is installed, is located at the bottom of the lifting column 220, thereby further facilitating inspection and maintenance of the height measuring device by a maintenance person. In other embodiments, the connection mode (for example, a direct or indirect mode) between the height measuring sleeve 110 and the lower mount 140 or the upper mount 150 may be flexibly selected according to whether the carriage 130 is installed or not and the relative position between the carriage 130 and the height measuring sleeve 110, which is not limited herein.

It should be noted that the connection position of the height measuring sleeve 110 of the height measuring device and the boarding bridge is not limited to the design of the above embodiment. As shown in FIG. 4, a beam 230 is provided at a position of the boarding bridge below two lifting columns 220, so that the lower mount 140 can be installed on the beam 230. Since the beam 230 and the inner guide pipe 221 of the lifting column 220 are relatively fixed, the first sleeve 111 fixed on the lower mount 140 is fixed relative to the inner guide pipe 221 of the lifting column 220.

As mentioned above, installation positions of various components when the height measuring device is adapted to the boarding bridge are not limited to this embodiment, and it is just necessary to ensure that the cable encoder and the lifting column 220 can move synchronously or correspondingly synchronously, for example, the top of the height-measuring sleeve 110 of the height-measuring device can be installed on the bottom or other parts of the outer guide pipe 222 in addition to the top of the outer guide pipe 222 of the lifting column 220, and can also play a role in height measurement. For another example, the height measurement can be performed by replacing the installation position of the cable 122 end of the cable encoder 120 with that of the body 121.

It should be noted herein that the boarding bridge shown in the drawings and described in the specification is merely one example of many types of boarding bridges that can employ the principles of the present disclosure. It should be clearly understood that the principles of the present disclosure are in no way limited to any of details of the boarding bridge or any of components of the boarding bridge shown in the drawings or described in the present specification.

Based on the above exemplary description of the height measuring device and the boarding bridge proposed by the present disclosure, such as a height measuring device adapted to the boarding bridge, an approximate working process of the height measuring device proposed by the present disclosure is as follows: when the boarding bridge is at a low position, the cable encoder determines a height of the boarding bridge at the low position according to the extended length of the cable. When the outer guide pipe of the lifting column is raised relative to the inner guide pipe, the outer guide pipe drives the second sleeve of the height measuring sleeve to be raised so that the cable is driven to be stretched upwards, and the cable encoder determines the height of the boarding bridge according to change of the length of the cable, thus achieving the height measuring effect, and vice versa.

In conclusion, in the height measuring device proposed by the present disclosure, the distance measuring mechanism is installed in the height measurement sleeve, so that the height measuring device is prevented from interference of obstacles during the monitoring process, and it is less prone to mis-measurement under a special environment such as rainy or snowy days, thereby improving accuracy and stability of the height measuring device.

In the boarding bridge proposed by the present disclosure, the height measuring device of the present disclosure is used, and the height measuring device is independent from other structures such as a lifting column by utilizing a cooperation design of the height measuring sleeve and the distance measuring mechanism. Compared with the prior art, the installation complexity of the distance measuring mechanism of the cable encoder is effectively reduced. Meanwhile, the stability and accuracy of the height measuring device are improved based on the protection effect of the height measuring sleeve, and effects of height detection and lifting control of the boarding bridge are further optimized.

Although the present disclosure has been described with reference to the exemplary embodiments, it should be understood that the terms are illustrative and exemplary without limitative. The present disclosure may be embodied in a variety of forms without departing from the spirit or scope of the present disclosure. It should be understood that the above-described embodiments are not limited to the foregoing details, and should be interpreted broadly within the spirit and scope of the appended claims. Therefore, all changes and modifications that fall within the scope of the claims or their equivalents should be covered by the appended claims.

## Claims

1. A height measuring device installed on an equipment to be measured to measure a height of the equipment to be measured, the equipment to be measured comprising a main body and a lifting mechanism being connected to the main body to lift the main body, **characterized in that**, the height measuring device comprises:
a height measuring sleeve vertically disposed on the equipment to be measured and comprises at least two sleeves which are sleeved and matched with each other; and
a distance measuring mechanism provided at bottom or top of the height measuring sleeve,
wherein, when the lifting mechanism drives the main body rise or fall, the height measuring sleeve extends or retracts as the main body or the lifting mechanism, so that a height information of the main body or the lifting mechanism is obtained according to a height information of the height measuring sleeve measured by the distance measuring mechanism.

2. The height measuring device according to claim 1, **characterized in that**, the height measuring sleeve comprises:
a first sleeve, a position of which is relatively fixed; and
a second sleeve sleeved inside or outside the first sleeve in a lifting manner.

3. The height measuring device according to claim 2, **characterized in that**, the height measuring sleeve further comprises a plurality of sets of sliding sleeves,
when the second sleeve is sleeved inside the first sleeve, the plurality of sets of sliding sleeves are respectively provided on an inner wall of a top of the first sleeve and an outer wall of the bottom of the second sleeve;
when the second sleeve is sleeved outside the first sleeve, plurality of sets of sliding sleeves are respectively provided on an outer wall of the top of the first sleeve and an inner wall of the bottom of the second sleeve.

4. The height measuring device according to claim 1, **characterized in that**, the distance measuring mechanism comprises a cable encoder comprising:
a body provided at the bottom of the height measuring sleeve; and
a cable having an end retractably wound inside the body, and the other end penetrating through an inner cavity of the height measuring sleeve and connected to the top of the height measuring sleeve.

5. The height measuring device according to claim 4, **characterized in that**, the height measuring device further comprises:
a carriage connected to the bottom of the height measuring sleeve,
wherein the body is provided inside the carriage, and the other end of the cable extends out of the carriage and is configured to penetrate through the inner cavity of the height measuring sleeve.

6. The height measuring device according to claim 1, **characterized in that**, the height measuring device comprises a cable encoder comprising:
a body provided at the top of the height measuring sleeve; and
a cable having an end retractably wound inside the body, and the other end penetrating through an inner cavity of the height measuring sleeve and connected to the bottom of the height measuring sleeve.

7. The height measuring device according to claim 6, **characterized in that**, the height measuring device further comprises:
a carriage connected to the top of the height measuring sleeve,
wherein the body is provided inside the carriage, and the other end of the cable extends out of the carriage and is configured to penetrate through the inner cavity of the height measuring sleeve.

8. A boarding bridge comprising a passage, a walking mechanism, a lifting column and a height measuring device, the lifting column being connected between the passage and the walking mechanism and used for lifting the passage; **characterized in that**, the height measuring device is configured as a height measuring device according to any one of claims 1 to 7;
the height measuring sleeve is vertically disposed on the lifting column and comprises at least two sleeves which are sleeved and matched with each other;
the distance measuring mechanism is provided at bottom or top of the height measuring sleeve;
wherein, when the lifting mechanism drives the main body rise or fall, the height measuring sleeve extends or retracts as the main body or the lifting mechanism, so that a height information of the main body or the lifting mechanism is obtained according to a height information of the height measuring sleeve measured by the distance measuring mechanism.

9. The boarding bridge according to claim 8, **characterized in that**,
there are two lifting columns respectively provided at two sides of the passage;
the boarding bridge comprises at least one height measuring device,
at least one height measuring device is provided on at least one of the two lifting columns.

10. The boarding bridge according to claim 9, **characterized in that**,
the boarding bridge comprises two height measuring devices;
the two height measuring devices are respectively provided on the two lifting columns.

11. The boarding bridge according to claim 9 or claim 10, **characterized in that**,
each of the lifting columns comprises an inner guide pipe and an outer guide pipe;
the bottom of the inner guide pipe is fixed on the walking mechanism of the boarding bridge;
the outer guide pipe is sleeved outside the inner guide pipe in a lifting manner and is connected to a side wall of the passage;
wherein the lifting column drives the passage rise or fall by means that the outer guide pipe extends or retracts relative to the inner guide pipe.

12. The boarding bridge according to claim 11, **characterized in that**, the height measuring sleeve comprises:
a first sleeve, a position of which is relatively fixed; and
a second sleeve sleeved inside or outside the first sleeve in a lifting manner.

13. The boarding bridge according to claim 11, **characterized in that**, the height measuring device further comprises:
a lower mount fixed at a lower end portion of the inner guide pipe, wherein the bottom of the height measuring sleeve is fixed on the lower mount; and
an upper mount fixed at an upper end portion of the outer guide pipe, wherein the top of the height measuring sleeve is fixed on the upper mount.

14. The boarding bridge according to claim 13, **characterized in that**, the cable encoder further comprises:
a carriage fixed on the lower mount and connected to the bottom of the height measuring sleeve,
wherein the body is provided within the carriage, and the other end of the cable extends out of the carriage and is configured to penetrate through an inner cavity of the height measuring sleeve.

15. The boarding bridge according to claim 13, wherein the cable encoder further comprises: a carriage fixed on the upper mount and connected to the top of the height measuring sleeve, wherein the body is provided within the carriage, and the other end of the cable extends out of the carriage and is configured to penetrate through an inner cavity of the height measuring sleeve.
